# EUROPÄISCHE PATENTSCHRIFT

(11) **EP 2 724 399 B1**
(45) Veröffentlichungstag und Bekanntmachung des Hinweises auf die Patenterteilung: **09.08.2017**
(21) Anmeldenummer: 12727879.4
(22) Anmeldetag: 19.06.2012
(51) Int. Cl.: H01M 4/38, H01M 4/66, H01M 4/80, H01M 10/052, H01M 10/054, H01M 4/58, H01M 4/04, H01M 4/139, H01M 4/62, H01M 4/74, H01M 4/13

(54) **LITHIUM-SCHWEFEL-BATTERIE**
LITHIUM-SULPHUR BATTERY
BATTERIE À BASE DE LITHIUM-SOUFRE

(30) Priorität: 21.06.2011 DE 102011077932
(43) Veröffentlichungstag der Anmeldung: 30.04.2014
(73) Patentinhaber: Fraunhofer Gesellschaft zur Förderung der angewandten Forschung E.V., 80686 München (DE)
(72) Erfinder: HAGEN, Markus, 76709 Kronau (DE); ALTHUES, Holger, 01309 Dresden (DE); KASKEL, Stefan, 01159 Dresden (DE); BERGER, Thomas, 76327 Pfinztal (DE); DÖRFLER, Susanne, 01159 Dresden (DE)
(74) Vertreter: Haggenmüller, Christian
(86) Internationale Anmeldenummer: PCT/EP2012/061687
(87) Internationale Veröffentlichungsnummer: WO 2012/175486

(56) Entgegenhaltungen:
- EP-A1- 1 391 948
- WO-A1-2012/001152
- US-A- 3 883 367
- US-A- 5 472 805
- US-B1- 6 403 263
- Christian Pappas, Michael Ankele: "Fortgeschrittenen Praktikum Quantenhall-Effekt", Universität Stuttgart , 24. Juli 2007 (2007-07-24), Seiten 1-23, XP002683347, Gefunden im Internet: URL:http://michi.is-a-geek.org/studium/Scr ipte/Fortgeschrittenen%20Praktikum/7%20-%2 0Quantenhalleffekt/main.pdf [gefunden am 2012-08-02]

## Beschreibung

Die vorliegende Erfindung betrifft eine Kathodeneinheit für eine Alkalimetall-Schwefel-Batterie und ein Verfahren zu deren Herstellung.

Batterien enthalten neben den Elektroden, die die elektrochemisch aktive Komponente umfassen, noch Stromableiter (bzw. Kollektoren), um den Elektronenstrom zu sammeln, abzuführen und für den Verbraucher nutzbar zu machen. Stromableiter sollten unter anderem ein geringes Gewicht zur Erzielung möglichst hoher Energiedichten aufweisen und einen guten elektrischen Kontakt zu den jeweiligen elektrochemisch aktiven Komponenten gewährleisten.

Ableitermaterialien für Batterieelektroden bestehen üblicherweise aus Metallen wie Aluminium, Kupfer und Nickel und weisen typische Dicken zwischen 9 und 30 µm auf.

Herkömmliche Elektroden werden über Pastenverfahren hergestellt, wobei ein Binder in einem Lösungsmittel gelöst und anschließend zusammen mit Leitruß und dem elektrochemisch aktiven Material dispergiert wird. Die erhaltene Paste wird dann auf eine als Stromableiter fungierende Metallfolie aufgebracht (z.B. durch Rakeln oder Extrudieren) und anschließend getrocknet und kalandriert.

Metallische Stromableiter weisen ein relativ hohes Gewicht auf, was sich nachteilig auf die zu erzielenden Energiedichten auswirkt. Außerdem sind metallische Stromableiter relativ teuer und im Langzeitbetrieb kann es durch Korrosion zum Versagen der Batterie kommen.

Bei Alkalimetall-Schwefel-Batterien handelt es sich um Batteriesysteme, mit denen sich hohe Energiedichten realisieren lassen. So weist Schwefel als Kathodenmaterial gegen Lithium theoretische Kapazitäten von 1672 mAh/g auf, die mehr als fünfmal so hoch sind wie theoretische Kapazitäten bei Lithium-Ionen-Kathoden (150-280 mAh/g). Die Erhöhung der Energiedichte und der Zyklenstabilität von Alkalimetall-Schwefel-Batterien sind die wesentlichen Entwicklungsschwerpunkte, um diesen Batterietyp weiter zu verbessern und als zukünftigen Energiespeicher zu etablieren.

US 6,403,263 beschreibt eine Kathodeneinheit einer elektrochemischen Zelle, die einen leitfähigen Träger und eine auf dem Träger aufgebrachte polymere Primer-Schicht enthält.

Eine Aufgabe der vorliegenden Erfindung besteht in der Bereitstellung einer Alkalimetall-Schwefel-Batterie, mit der sich eine hohe Energiedichte realisieren lässt, die eine gute Langzeitstabilität aufweist und sich bevorzugt in einem möglichst effizienten und kostengünstigen Verfahren herstellen lässt.

Gemäß eines ersten Aspekts der vorliegenden Erfindung wird die Aufgabe gelöst durch die Bereitstellung einer Lithium-Schwefel-Batterie, umfassend eine Kathodeneinheit enthaltend:
- einen Kathodenableiter, der ein Kohlenstoffsubstrat umfasst,
- eine elektrochemisch aktive Komponente, die aus Schwefel oder Lithiumsulfid ausgewählt wird und in elektrisch leitendem Kontakt mit dem Kohlenstoffsubstrat steht,
dadurch gekennzeichnet, dass
das Kohlenstoffsubstrat als selbsttragendes Flächengebilde in Form eines Kohlenstofffaserfilzes, eines Kohlenstofffasergewebes, einer Kohlenstoff-Gasdiffusionsschicht oder einer Kombination davon, oder eines Kohlenstoffnanoröhrengeflechts oder einer Kohlenstofffolie vorliegt und eine Dicke im Bereich von 50 µm bis 5 mm aufweist und
die elektrochemisch aktive Komponente zumindest teilweise die Oberfläche des Kohlenstoffsubstrats belegt.

Im Rahmen der vorliegenden Erfindung wurde realisiert, dass sich durch die Verwendung eines Kohlenstoffsubstrats als Ableitermaterial in einer Kathodeneinheit eine Lithium-Schwefel-Batterie hoher Energiedichte realisieren lässt. Auch lässt sich eine solche Kathodeneinheit einfach und in effizienter Weise herstellen.

Die Verwendung eines Kohlenstoffsubstrats ermöglicht es, in dem Kathodenableiter auf metallische Komponenten wie z.B. Metallfolien zu verzichten. Durch diese Gewichtseinsparung lässt sich die Energiedichte einer Alkalimetall-Schwefel-Batterie weiter verbessern.

In einer bevorzugten Ausführungsform enthält der Kathodenableiter der Kathodeneinheit daher kein metallisches Substrat, insbesondere keine metallischen Flächengebilde wie z.B. Metallfolien, wie sie ansonsten in gängigen Kathodenableitern eingesetzt werden.

Im Rahmen der vorliegenden Erfindung wird der Begriff "Kathodenableiter" in seiner üblichen, dem Fachmann geläufigen Bedeutung verstanden und bezeichnet die Komponente einer Batterie, die in leitfähigem Kontakt mit dem elektrochemisch aktiven Material der Kathode steht und die Stromabführung bzw. -zuführung von bzw. zu der aktiven Komponente der Elektrode bewirkt. Ein Ableiter einer Elektrode wird auch als "Stromabnehmer" (z.B. Kathodenstromabnehmer) bezeichnet.

Das Kohlenstoffsubstrat ist als selbsttragendes Flächengebilde ausgestaltet. Der Begriff "selbsttragend" bedeutet, dass das Flächengebilde durch entsprechende Wechselwirkung seiner nachfolgend noch eingehender beschriebenen Komponenten (wie z.B. der Kohlenstofffasern, Kohlenstoffpartikel, Kohlenstoffnanoröhren etc.) untereinander auch ohne das Aufbringen auf ein Trägersubstrat eine definierte Form und eine ausreichende Formbeständigkeit aufweist. Das selbsttragende Flächengebilde kann somit ohne ein Trägersubstrat verwendet werden. Alternativ kann das selbsttragende Flächengebilde noch zusätzlich auf einem Trägersubstrat fixiert werden.

Das selbsttragende Kohlenstoffsubstrat kann zu seiner besseren Fixierung noch auf einem Trägersubstrat aufgebracht sein. Bei diesem Trägersubstrat kann es sich beispielsweise um ein Kunststoffmaterial oder einen Vliesstoff handeln. Auch ist es möglich, das Kohlenstoffsubstrat des Kathodenableiters auf dem Batterieseparator anzubringen.

Um gegebenenfalls die Leitfähigkeit des Kohlenstoffsubstrats weiter zu verbessern, kann dieses auch auf eine metallische Struktur wie z.B. ein Metallgitter als Trägersubstrat aufgebracht sein.

Die Auswahl geeigneter Kohlenstoffmaterialien für das Kohlenstoffsubstrat hat so zu erfolgen, dass noch eine ausreichend große Leitfähigkeit dieses Kohlenstoffsubstrats und damit auch des Kathodenableiters gewährleistet ist.

Bevorzugt weist das Kohlenstoffsubstrat eine Flächenleitfähigkeit von mindestens 0,01 S, bevorzugter von mindestens 1 S, noch bevorzugter von mindestens 100 S auf. Die Flächenleitfähigkeit kann dabei mit der 4-Punkt-Methode bestimmt werden. Alternativ kann ein Gewebe im rechteckigen Format mit Metallkontakten an 2 gegenüberliegenden Kanten kontaktiert und darüber eine Widerstandsmessung durchgeführt werden.

Bevorzugt weist das Kohlenstoffsubstrat einen Kohlenstoffgehalt von mindestens 70 Gew%, bevorzugter mindestens 80 Gew%, noch bevorzugter mindestens 90 Gew% auf. In einer bevorzugten Ausführungsform kann der Kathodenableiter sogar ausschließlich aus Kohlenstoff bestehen.

Geeignete Kohlenstoffmaterialien, mit denen sich die für eine Ableiterstruktur ausreichende elektrische Leitfähigkeit realisieren lässt, sind dem Fachmann grundsätzlich bekannt. Im Rahmen der vorliegenden Erfindung kann das Kohlenstoffmaterial des Kohlenstoffsubstrats beispielsweise ausgewählt werden aus Kohlenstofffasern, Graphit (z.B. in Form von Partikeln bzw. Flocken), Kohlenstoffnanoröhren, porösem Kohlenstoff (z.B. Aktivkohle), Graphen (z.B. in Form von Graphenflocken), Ruß, oder deren Gemischen.

Außer in ihrer Festkörperstruktur (z.B. Graphit, Graphen, amorphe Festkörper, etc.) können sich diese Kohlenstoffmaterialien auch in ihrer Morphologie (z.B. partikelförmig, faserförmig, etc.) oder ihrer Porosität unterscheiden.

Bevorzugt liegen diese Kohlenstoffmaterialien in möglichst hoher Reinheit vor. In einer bevorzugten Ausführungsform weisen die Kohlenstoffmaterialien des Kohlenstoffsubstrats keine weiteren Elemente und/oder keine funktionellen Gruppen auf.

Das Kohlenstoffsubstrat des Kathodenableiters kann aus diesen Kohlenstoffmaterialien gefertigt sein.

In einer Ausführungsform handelt es sich bei dem Kohlenstoffsubstrat um ein gewebtes oder nicht-gewebtes textiles Flächengebilde, das aus einem Kohlenstofffaserfilz, einem Kohlenstofffasergewebe, einer Kohlenstoff-Gasdiffusionsschicht, oder Kombinationen davon ausgewählt wird. Solche textilen Kohlenstoff-Flächengebilde sind dem Fachmann bekannt und kommerziell erhältlich.

Bei Kohlenstofffilz handelt es sich um ein Textilmaterial, das aus mehr oder weniger zufällig orientierten und miteinander verschlungenen Kohlenstofffasern besteht. Solche Materialien sind dem Fachmann bekannt und kommerziell erhältlich.

Die spezifische Oberfläche der Kohlenstofffasern des Kohlenstofffilzes kann über einen breiten Bereich variiert werden. Die Kohlenstofffasern können z.B. eine sehr hohe spezifische Oberfläche aufweisen (z.B. mindestens 1000 m²/g oder sogar mindestens 2000 m²/g). Solche hohen spezifischen Oberflächen können z.B. durch poröse Fasern realisiert werden. Im Rahmen der vorliegenden Erfindung sind aber auch nicht-poröse Kohlenstofffasern mit deutlich niedrigerer spezifischer Oberfläche (z.B. kompakte, nicht-poröse, graphitische Fasern) verwendbar.

Die Kohlenstofffasern des Kohlenstofffilzes können beispielsweise eine Dicke zwischen 50 µm und 5 mm und/oder ein Gewicht kleiner als 20 mg/cm² aufweisen. Der Kohlenstofffaserfilz kann auch oberflächenbehandelt sein.

Kohlenstofffasergewebe sind dem Fachmann bekannt und kommerziell erhältlich oder durch dem Fachmann bekannte Standardverfahren herstellbar.

Die spezifische Oberfläche der Kohlenstofffasern des Kohlenstofffasergewebes kann über einen breiten Bereich variiert werden. Die Kohlenstofffasern können beispielsweise eine hohe spezifische Oberfläche (z.B. mindestens 1000 m²/g oder sogar mindestens 2000 m²/g) aufweisen. Solche hohen spezifischen Oberflächen können z.B. durch poröse Fasern realisiert werden. Im Rahmen der vorliegenden Erfindung sind aber auch nicht-poröse Kohlenstofffasern mit deutlich niedrigerer spezifischer Oberfläche (z.B. kompakte, nicht-poröse, graphitische Fasern) verwendbar.

Die Kohlenstofffasern des Kohlenstofffasergewebes können beispielsweise eine Dicke zwischen 50 µm und 2 mm und/oder ein Gewicht kleiner als 20 mg/cm² aufweisen. Die Kohlenstofffasern des Kohlenstofffasergewebes können auch oberflächenbehandelt sein.

Kohlenstoff-Gasdiffusionsschichten sind poröse Schichten mit einer Dicke, die typischerweise zwischen 50 µm und 500 µm liegt. Der strukturelle Aufbau der Kohlenstoff-Gasdiffusionsschichten ist dem der Kohlenstofffaserfilze ähnlich, jedoch ist die Schichtdicke geringer und definierter.

Gemäß einer weiteren Ausführungsform umfasst das Kohlenstoffsubstrat ein Geflecht bzw. Netzwerk aus Kohlenstoffnanoröhren. Solch ein Geflecht bzw. Netzwerk aus Kohlenstoffnanoröhren kann durch Sprüh- oder Rakelverfahren aus Dispersionen oder Pasten hergestellt werden. Wie nachfolgend noch erläutert wird, können selbsttragende Kohlenstoffnanoröhrengeflechte bzw. -netzwerke in Form eines sogenannten "Bucky-Papiers" durch ein Filtrationsverfahren aus Dispersion erhalten werden.

Gemäß einer weiteren Ausführungsform liegt das Kohlenstoffsubstrat in Form einer Kohlenstofffolie vor.

Bevorzugte Materialien für die Kohlenstofffolie sind z.B. Graphit, Ruß, Graphen, Aktivkohle, Kohlenstoffnanoröhren, oder Gemische dieser Materialien.

Folien aus den oben genannten Kohlenstoffmaterialien sind dem Fachmann bekannt und kommerziell erhältlich oder durch geläufige Verfahren herstellbar.

Beispielhaft können an dieser Stelle Graphitfolien oder sogenanntes "Bucky-Papier" genannt werden.

Bei Bucky-Papier handelt es sich um eine extrem dünne Folie aus aggregierten, miteinander verflochtenen Kohlenstoffnanoröhren. Solche selbsttragenden Kohlenstoffnanoröhrengeflechte erhält man durch ein Filtrationsverfahren aus Dispersion.

Graphitfolien sind dem Fachmann bekannt und kommerziell erhältlich oder durch dem Fachmann bekannte Standardverfahren herstellbar. Beispielsweise können Graphitfolien aus expandierten Naturgraphitflocken hergestellt wird, die in einem Kalanderprozess rein mechanisch aneinander gebunden werden.

Die Dicke des Kohlenstoffsubstrats liegt im Bereich von 50 µm bis 5 mm.

Der Kathodenableiter kann ausschließlich aus dem Kohlenstoffsubstrat bestehen.

Alternativ kann der Kathodenableiter zusätzlich weitere Komponenten aufweisen.

Gemäß einer spezifischen Ausführungsform kann auf dem Kohlenstoffsubstrat eine Substratschicht aufgebracht sein. Gegebenenfalls kann der Substratschicht noch ein leitfähiges Additiv zugegeben werden.

Wie nachfolgend noch eingehender erläutert werden wird, kann es sich bei dieser Substratschicht um eine Katalysatorschicht handeln. In einer bevorzugten Ausführungsform umfasst die Katalysatorschicht eine Cokatalysatorschicht, auf der zumindest ein Übergangsmetall vorliegt, z.B. in Form einer Übergangsmetallschicht oder in Form von Übergangsmetallpartikeln. Bei der Cokatalysatorschicht kann es sich z.B. um eine Oxidschicht, eine Nitridschicht oder Oxynitridschicht handeln. Als geeignete Materialien für die Cokatalysatorschicht können Aluminiumoxid, Siliciumdioxid, Magnesiumoxid, Titannitrid oder Siliciumnitrid genannt werden. Als geeignete Übergangsmetalle können Fe, Ni, Mo, Co, Cr, Mn oder deren Legierungen genannt werden. Wie nachfolgend noch genauer erläutert wird, kann diese Katalysatorschicht in einem bevorzugten Herstellungsverfahren der erfindungsgemäßen Kathodeneinheit die Umsetzung einer Kohlenstoff-haltigen Prekursorverbindung zu Kohlenstoffnanoröhren katalysieren. Die Katalysatorschicht weist bevorzugt eine Dicke im Bereich von 5 nm bis 100 nm, bevorzugter von 20 nm bis 50 nm auf.

In einer weiteren bevorzugten Ausführungsform handelt es sich bei der Substratschicht um eine Polymerschicht (z.B. eine Klebstoffschicht). Durch diese Polymerschicht können z.B. Kohlenstoffnanoröhren auf dem Kathodenableiter fixiert werden. Die Polymerschicht weist bevorzugt eine Dicke im Bereich von 0,01 µm bis 30 µm, bevorzugter von 1 µm bis 10 µm auf.

Anstelle einer Substratschicht können alternativ partikelförmige Komponenten auf dem Kohlenstoffsubstrat des Kathodenableiters vorliegen. In einer spezifischen Ausführungsform kann es sich dabei um Katalysatorpartikel handeln. Wie bereits oben erwähnt, kann der Katalysator die Umsetzung einer Kohlenstoff-haltigen Prekursorverbindung wie z.B. Ethen zu Kohlenstoffnanoröhren katalysieren. Hinsichtlich geeigneter Übergangsmetalle kann auf die obigen Ausführungen verwiesen werden.

Wie oben ausgeführt, enthält die Kathodeneinheit der erfindungsgemäßen Lithium-Schwefel-Batterie außerdem eine elektrochemisch aktive Komponente, die aus Schwefel oder einem Lithiumsulfid ausgewählt wird und in elektrisch leitendem Kontakt mit dem Kohlenstoffsubstrat steht.

Bevorzugt liegt der Schwefel als elektrochemisch aktive Komponente in einer Menge von 0,5 mg bis 30 mg pro cm² Kathodenableiter vor.

Bevorzugt liegt das Alkalimetallsulfid als elektrochemisch aktive Komponente in einer Menge von 0,5 mg bis 20 mg/cm² Kathodenableiter vor.

Der elektrisch leitende Kontakt zwischen der elektrochemisch aktiven Komponente und dem Kohlenstoffsubstrat wird dadurch gewährleistet, dass die elektrochemisch aktive Komponente zumindest teilweise die Oberfläche des Kohlenstoffsubstrats belegt. In diesem Fall existiert also eine gemeinsame Grenzfläche zwischen elektrochemisch aktiver Komponente und Kathodenableiter.

In einer bevorzugten Ausführungsform umfasst die Kathodeneinheit zusätzlich eine elektrochemisch inaktive, elektrisch leitfähige Kohlenstoffkomponente, die in elektrisch leitendem Kontakt mit dem Kohlenstoffsubstrat steht, wobei die elektrochemisch aktive Komponente zumindest teilweise die Oberfläche der elektrochemisch inaktiven, elektrisch leitfähigen Kohlenstoffkomponente belegt. Es kann bevorzugt sein, dass die elektrochemisch inaktive, elektrisch leitfähige Kohlenstoffkomponente zumindest teilweise auf der Oberfläche des Kathodenableiters (d.h. auf dem Kohlenstoffsubstrat oder der optionalen Substratschicht) aufgebracht ist.

Solche elektrochemisch inaktiven, elektrisch leitfähigen Kohlenstoffkomponenten sind dem Fachmann grundsätzlich bekannt.

In einer bevorzugten Ausführungsform wird die elektrochemisch inaktive, elektrisch leitfähige Kohlenstoffkomponente ausgewählt aus Kohlenstoffnanoröhren, Graphit, Ruß, Graphen, porösen Kohlenstoffen wie Aktivkohle, oder deren Gemischen.

Wie nachfolgend noch eingehender beschrieben wird, kann das Aufbringen der elektrochemisch inaktiven, elektrisch leitfähigen Kohlenstoffkomponente wie auch das Aufbringen der elektrochemisch aktiven Komponente durch dem Fachmann bekannte Verfahren erfolgen.

In Abhängigkeit vom verwendeten Materialtyp kann die Menge an elektrochemisch inaktiver, elektrisch leitfähiger Kohlenstoffkomponente über einen breiten Bereich variiert werden. Die elektrochemisch inaktive, elektrisch leitfähige Kohlenstoffkomponente kann beispielsweise in einer Menge von 0,1 mg bis 2 mg pro cm² Kathodenableiter vorliegen.

Handelt es sich bei der elektrochemisch inaktiven, elektrisch leitfähigen Kohlenstoffkomponente um Kohlenstoffnanoröhren, werden diese bevorzugt über einen chemischen Gasphasenabscheidungsprozess auf den Kathodenableiter aufgebracht. Dieses Herstellungsverfahren bewirkt, dass die Kohlenstoffnanoröhren mit einem ihrer Enden in der Oberfläche des Kathodenableiters verankert bzw. fixiert sind.

In einer bevorzugten Ausführungsform umfasst die Kathodeneinheit daher Kohlenstoffnanoröhren als elektrochemisch inaktive, elektrisch leitfähige Kohlenstoffkomponente, wobei die Kohlenstoffnanoröhren zumindest teilweise mit einem ihrer Enden in der Oberfläche des Kathodenableiters verankert bzw. fixiert sind.

Die Länge der Kohlenstoffnanoröhren kann über einen breiten Bereich variieren. Als geeignete Länge kann in diesem Zusammenhang z.B. ein Bereich von 5 µm bis 1000 µm genannt werden.

Der Durchmesser der Nanoröhren kann z.B. im Bereich von 0,1-100 nm, bevorzugter 1-50 nm, besonders bevorzugt 5-20 nm liegen.

Bevorzugt liegen die Kohlenstoffnanoröhren in einer Menge von 0,1 mg bis 100 mg, bevorzugter von 0,5 mg bis 20 mg, noch bevorzugter von 0,5 mg bis 5 mg pro cm² Kathodenableiter vor.

Bevorzugt enthält die Anode eine oder mehrere der folgenden Komponenten: Metallisches Lithium, Graphit, Legierungen aus Silizium oder Zinn, Komposite wie z.B. Silizium mit Kohlenstoff, Zinn mit Kohlenstoff, Hard Carbons.

Enthält die Kathodeneinheit Schwefel als elektrochemisch aktive Komponente, so kann die Anode in einer bevorzugten Ausführungsform metallisches Lithium enthalten. Alternativ kann die Anode lithiierten Graphit oder Li-Legierungen aus z.B. Silizium oder Zinn oder Komposite... enthalten.

Enthält die Kathodeneinheit ein Lithiumsulfid als elektrochemisch aktive Komponente, so kann die Anode in einer bevorzugten Ausführungsform Graphit, Materialien, die mit Li legieren können wie z.B. Silizium oder Zinn, Komposite wie z.B. Silizium mit Kohlenstoff, Zinn mit Kohlenstoff, Hard Carbons enthalten.

Die Kathodeneinheit der erfindungsgemäßen Lithium-Schwefel-Batterie kann hergestellt werden über ein Verfahren umfassend:
- die Bereitstellung eines Kathodenableiters, der ein Kohlenstoffsubstrat umfasst,
- die Zugabe einer elektrochemisch aktiven Komponente, die aus Schwefel oder einem Lithiumsulfid ausgewählt wird, so dass die elektrochemisch aktive Komponente in elektrisch leitendem Kontakt mit dem Kohlenstoffsubstrat steht.

Hinsichtlich der Eigenschaften des Kohlenstoffsubstrats und der elektrochemisch aktiven Komponente kann auf die obigen Ausführungen verwiesen werden.

In einer bevorzugten Ausführungsform wird zusätzlich eine elektrochemisch inaktive, elektrisch leitfähige Kohlenstoffkomponente zugegeben, so dass diese Kohlenstoffkomponente in elektrisch leitendem Kontakt mit dem Kohlenstoffsubstrat steht. Es kann bevorzugt sein, dass diese elektrochemisch inaktive, elektrisch leitfähige Kohlenstoffkomponente auf der Oberfläche des Kathodenableiters (d.h. auf dem Kohlenstoffsubstrat oder der optionalen Substratschicht) aufgebracht wird.

Hinsichtlich der Eigenschaften der elektrochemisch inaktiven, elektrisch leitfähigen Kohlenstoffkomponente kann auf die obigen Ausführungen verwiesen werden.

Das Aufbringen der elektrochemisch inaktiven, elektrisch leitfähigen Kohlenstoffkomponente kann vor der Zugabe der elektrochemisch aktiven Komponente erfolgen. Nach der Bereitstellung des Kathodenableiters erfolgt also zuerst das Aufbringen der elektrochemisch inaktiven, elektrisch leitfähigen Kohlenstoffkomponente (z.B. der Kohlenstoffnanoröhren) und in einem weiteren Schritt wird die elektrochemisch aktive Komponente aufgebracht, so dass die elektrochemisch aktive Komponente zumindest teilweise die Oberfläche der elektrochemisch inaktiven, elektrisch leitfähigen Kohlenstoffkomponente belegt.

Alternativ kann das Aufbringen der elektrochemisch inaktiven, elektrisch leitfähigen Kohlenstoffkomponente auch zeitlich überlappend mit der Zugabe der elektrochemisch aktiven Komponente erfolgen. Weiterhin ist es im Rahmen der vorliegenden Erfindung auch möglich, dass die elektrochemisch inaktive, elektrisch leitfähige Kohlenstoffkomponente und die elektrochemisch aktive Komponente gemeinsam aufgebracht werden.

Das Aufbringen der elektrochemisch inaktiven, elektrisch leitenden Kohlenstoffkomponente kann über gängige, dem Fachmann bekannte Verfahren erfolgen. Beispielsweise kann die elektrochemisch inaktive, elektrisch leitende Kohlenstoffkomponente durch eine chemische Gasphasenabscheidung (CVD, "Chemical Vapor Deposition"), eine physikalische Gasphasenabscheidung (PVD, "Physical Vapor Deposition"), in Form einer Paste (z.B. Kohlenstoffkomponente und Binder wie PVdF, PVdF-co-HFP oder PAN in Pastenform), durch Sprüh- oder Tauchverfahren aus flüssiger Dispersion, oder auch durch Aufbringen einer Kohlenstoff-Precursorverbindung (z.B. organische Verbindung oder Polymer) und anschließender Carbonisierung und Aktivierung in die Kathodeneinheit eingebracht bzw. auf der Oberfläche des Kathodenleiters aufgebracht werden.

In einer spezifischen Ausführungsform kann der Schritt der Bereitstellung des Kathodenableiters auch das Aufbringen einer Substratschicht wie z.B. einer Katalysatorschicht oder Polymerschicht auf dem Kohlenstoffsubstrat umfassen. Alternativ können anstelle einer Katalysatorschicht auch Katalysatorpartikel direkt auf dem Kohlenstoffsubstrat aufgebracht werden. Wird eine Polymerschicht als Substratschicht aufgebracht, handelt es sich bevorzugt um eine Klebstoffschicht.

Handelt es sich bei der Substratschicht um eine Katalysatorschicht, die eine anorganische Cokatalysatorschicht wie z.B. eine Oxid-, Nitrid- oder Oxynitridschicht umfasst, kann diese z.B. über einen Sol-Gel-Prozess, ein CVD-Verfahren (d.h. chemische Gasphasenabscheidung) oder ein PVD-Verfahren (physikalische Gasphasenabscheidung) aufgebracht werden.

Werden Kohlenstoffnanoröhren als elektrochemisch inaktive, elektrisch leitende Kohlenstoffkomponente aufgebracht, erfolgt dies bevorzugt dadurch, dass die Kohlenstoffnanoröhren auf der Oberfläche des Kathodenableiters hergestellt werden, z.B. über einen chemischen Gasphasenabscheidungsprozess (CVD). Durch die Verwendung der Oberfläche des Kathodenableiters (d.h. entweder der Oberfläche des Kohlenstoffsubstrats oder der Oberfläche der Substratschicht wie z.B. der Katalysatorschicht) als Reaktions- und Abscheidungsfläche wird erreicht, dass die Nanoröhren mit einem ihrer Enden auf dieser Ableiteroberfläche fixiert bzw. verankert werden.

Alternativ ist es auch möglich, die Kohlenstoffnanoröhren zunächst auf einer externen, d.h. nicht in der Kathodeneinheit der erfindungsgemäßen Lithium-Schwefel-Batterie vorliegenden Schicht herzustellen, z.B. auf einer Schicht, die der oben beschriebenen Katalysatorschicht entspricht, und diese Nanoröhren anschließend auf eine zweite Schicht zu transferieren (nachfolgend als Transferschicht bezeichnet) und dort zu fixieren. Bei dieser Transferschicht kann es sich um die bereits auf dem Kohlenstoffsubstrat aufgebrachte Substratschicht (z.B. in Form der Polymerschicht, bevorzugt der Klebstoffschicht) handeln. Alternativ können zuerst die Kohlenstoffnanoröhren auf die Transferschicht übertragen werden und die Transferschicht mit den darauf fixierten Kohlenstoffnanoröhren anschließend auf dem Kohlenstoffsubstrat aufgebracht werden. Als Transferschicht geeignet ist z.B. eine Polymerschicht (z.B. eine Klebstoffschicht).

Die elektrochemisch aktive Komponente kann über gängige Verfahren auf der Oberfläche des Kathodenableiters und/oder der elektrochemisch inaktiven, elektrisch leitenden Kohlenstoffkomponente abgeschieden werden.

Das Aufbringen von Schwefel auf die Kohlenstoffnanoröhren kann über Schwefelpulver, das nachträglich eingeschmolzen wird, flüssigen erhitzten Schwefel, Schwefelsublimation oder in einem Lösungsmittel gelösten Schwefel erfolgen.

Soll ein Lithiumsulfid als elektrochemisch aktive Komponente auf die Oberfläche des Kathodenableiters und/oder der elektrochemisch inaktiven, elektrisch leitenden Kohlenstoffkomponente aufgebracht werden, kann dies gemäß einer bevorzugten Ausführungsform dadurch realisiert werden, dass zunächst Schwefel auf die Oberfläche aufgebracht wird und anschließend mit einer reaktiven Alkalimetallverbindung, bevorzugt einer metallorganischen Alkalimetallverbindung wie z.B. n-Butyllithium, zu einem Alkalimetallsulfid umgesetzt wird. Bezüglich der Aufbringung des Schwefels kann auf die obigen Ausführungen verwiesen werden. Das in Kontakt bringen des Schwefels und der reaktiven Alkalimetallverbindung kann dadurch erfolgen, dass die reaktive Alkalimetallverbindung ebenfalls über ein Lösungsmittel zugeführt wird und die Umsetzung zum Alkalimetallsulfid bei erhöhter Temperatur bewirkt wird. Alternativ kann auch das Alkalimetallsulfid in einem Lösungsmittel gelöst werden (z.B. Ethanol) und auf das erhitzte Kohlenstoffsubstrat oder gegebenenfalls die erhitzte Substratschicht aufgebracht werden. Alternativ kann das Alkalimetallsulfid auch bei hohen Temperaturen auf das Kohlenstoffsubstrat oder gegebenenfalls die Substratschicht eingeschmolzen werden. Die gemäß des oben beschriebenen Verfahrens erhältliche Kathodeneinheit lässt sich mit einer geeigneten Anode kombinieren, um so eine Lithium-Schwefel-Batterie bereit zu stellen. Hinsichtlich geeigneter Anoden kann auf die oben gemachten Ausführungen verwiesen werden.

Wie bereits oben angemerkt, lässt sich durch die Verwendung eines Kohlenstoffsubstrats als Ableitermaterial in einer Kathodeneinheit eine Lithium-Schwefel-Batterie hoher Energiedichte realisieren. Die Verwendung eines Kohlenstoffsubstrats ermöglicht es, in dem Kathodenableiter auf metallische Substrate wie z.B. Metallfolien zu verzichten. Zusätzlich kann das Kohlenstoffsubstrat selbst als Reaktionsfläche für die elektrochemische Reaktion verwendet werden und fungiert so parallel als Ableiter und Elektrode. Durch diese Gewichtseinsparung lässt sich die Energiedichte einer Lithium-Schwefel-Batterie weiter verbessern.

Zusätzlich lassen sich auf Kohlenstoffsubstraten im Vergleich zu Metallsubstraten besser und leichter elektrochemisch inaktive, elektrisch leitfähige Kohlenstoffmaterialien wie z.B. Kohlenstoffnanoröhren als zusätzliche, die Energiedichte weiter verbessernde Komponenten aufbringen.

Weiterhin erleichtert ein Kohlenstoffsubstrat die Fertigung, da es temperaturstabiler als Al ist. Daher können auch zusätzliche Kohlenstoffkomponenten wie z.B. Kohlenstoffnanoröhren leichter über CVD aufgebracht werden können. Zusätzlich ist ein selbsttragendes Kohlenstoffsubstrat flexibler als eine Metallfolie. Es lassen sich so Wickelzellen leichter herstellen. Weiterhin können Kohlenstoffnanoröhren oder vergleichbare zusätzliche Kohlenstoffkomponenten, die auf eine Metallfolie aufgebracht wurden, durch mechanische Berührung leicht abgetragen werden. Ein flexibles selbsttragendes Kohlenstoffsubstrat ist hier wesentlich widerstandsfähiger.

Durch die nachfolgenden Beispiele wird die Erfindung eingehender erläutert.

### Beispiele

### Beispiel 1

In Beispiel 1 wurde eine Lithium-Schwefel-Zelle hergestellt, bei der ein kommerziell erhältliches Kohlenstoffgewebe mit sehr hoher Reaktionsoberfläche von ca. 2000 m²/g und einem Gewicht von ca. 13 mg/cm² als Kohlenstoffsubstrat verwendet wurde. Auf dem Kohlenstoffgewebe der Größe 0,785 cm² wurden 13,8 mg Schwefelpulver eingeschmolzen. Als Elektrolyt wurde 0,7M LiTFSI in DME:DIOX (2:1, v:v) mit LiNO3 Additiv verwendet. Die Zelle wurde bei unterschiedlichen Stromdichten gegen Lithium Metall zwischen 1,0 und 3,0 V gezykelt. Die erreichten Flächenkapazitäten liegen je nach Stromdichte bei 2,0-5,0 mAh/cm². Im Vergleich werden mit konventionell über Pastenverfahren hergestellten Lithium-Ion oder Lithium Schwefel Zellen bei entsprechenden Stromdichten nur 0,5-3,0 mAh/cm² erreicht.

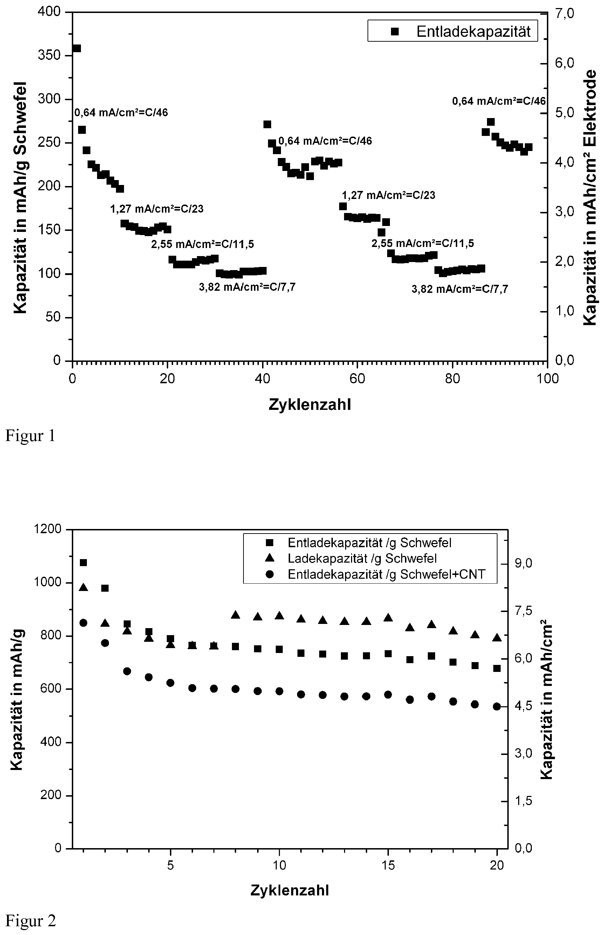

Figur 1 zeigt die Kapazität als Funktion der Zyklenzahl.

Beschichtet man ein kommerziell erhältliches Kohlenstoffgewebe mit vom Hersteller nicht angegebener, aber deutlich geringerer Oberfläche mit Kohlenstoffnanoröhren und stellt wie oben beschrieben eine Lithium Schwefel Zelle mit 6,6 mg Schwefel und 1,76 mg CNT auf einer 0,785 cm² Elektrode her, so lassen sich hohe Schwefelausnutzungen (>50%) und hohe Flächenkapazitäten um 6,0 mAh/cm² bei einer Stromdichte von 0,64 mA/cm² erreichen.

Figur 2 zeigt die Kapazität als Funktion der Zyklenzahl.

Die Ergebnisse belegen, dass sich für eine Alkalimetall-Schwefel-Batterie gute elektrochemische Ergebnisse erzielen lassen, wenn ein Kohlenstoff-Substrat als Kathodenableiter verwendet wird (Figur 1). Eine weitere Verbesserung ergibt sich, wenn zusätzlich auf dem als Kathodenableiter fungierenden Kohlenstoff-Substrat geeignete elektrochemisch inaktive, elektrisch leitfähige Kohlenstoffkomponenten wie z.B. Kohlenstoffnanoröhren aufgebracht werden (Figur 2).

### Beispiel 2

In Beispiel 2 wurde eine Lithium-Schwefel-Zelle hergestellt, bei der ein kommerziell erhältlicher Kohlenstofffilz (Gewicht: 3 mg/cm²) als Kohlenstoffsubstrat des Kathodenableiters fungiert und auf diesem Kohlenstofffilz Kohlenstoffnanoröhren aufgebracht sind. Weiterhin enthält die Kathodeneinheit der Lithium-Schwefel-Batterie Schwefel als elektrochemisch aktive Komponente. Der Schwefel belegt zumindest einen Teil der Oberfläche der Kohlenstoffnanoröhren. Auf der Filzelektrode (A=1,13 cm²) mit 1,7 mg Kohlenstoffnanoröhren wurden 14,8 mg Schwefel eingeschmolzen. Als Elektrolyt wurde 1M LiTFSI in DME:DIOX (2:1, v:v) mit LiNO3 Additiv verwendet. Die Zelle wurde bei 1mA (entspricht Stromdichte von 0,88 mA/cm² und einer C-Rate von C/25) gegen Lithium Metall zwischen 1,0 und 3,0 V gezykelt. Die Schwefelkathode befand sich zwischen zwei Lithiumetallfolien und wurde von der Seite mit einem Kontaktstift kontaktiert. Der Strom wurde somit tatsächlich ausschließlich über den Kohlenstoffableiter transportiert, womit gezeigt werden konnte, dass Kohlenstoffableiter metallische Ableiter substituieren können. Die erreichten Flächenkapazitäten liegen mit 12,2 mAh/cm² ca. viermal so hoch wie bei über Pastenverfahren hergestellten Lithium-Ion oder Lithium Schwefel Zellen. Die Schwefelausnutzung betrug 56 %.

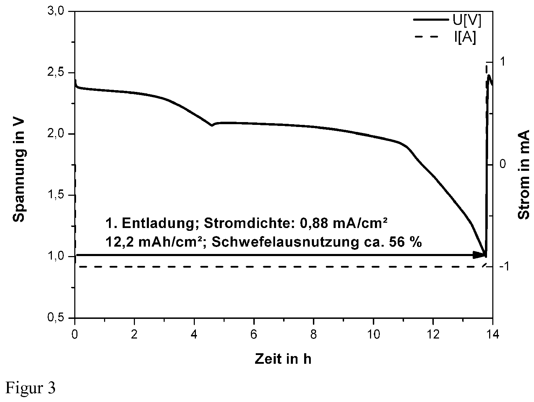

Figur 3 zeigt Spannung und Strom als Funktion der Zeit.

## Patentansprüche

1. Eine Lithium-Schwefel-Batterie, umfassend eine Kathodeneinheit enthaltend:
- einen Kathodenableiter, der ein Kohlenstoffsubstrat umfasst,
- eine elektrochemisch aktive Komponente, die aus Schwefel oder Lithiumsulfid ausgewählt wird und in elektrisch leitendem Kontakt mit dem Kohlenstoffsubstrat steht,
**dadurch gekennzeichnet, dass**
das Kohlenstoffsubstrat als selbsttragendes Flächengebilde in Form eines Kohlenstofffaserfilzes, eines Kohlenstofffasergewebes, einer Kohlenstoff-Gasdiffusionsschicht oder einer Kombination davon, oder eines Kohlenstoffnanoröhrengeflechts oder einer Kohlenstofffolie vorliegt und eine Dicke im Bereich von 50 µm bis 5 mm aufweist und
die elektrochemisch aktive Komponente zumindest teilweise die Oberfläche des Kohlenstoffsubstrats belegt.

2. Die Lithium-Schwefel-Batterie gemäß Anspruch 1, wobei das Kohlenstoffsubstrat einen Kohlenstoffgehalt von mindestens 70 Gew%, aufweist; und/oder das Kohlenstoffmaterial des Kohlenstoffsubstrats ausgewählt wird aus Kohlenstofffasern, Graphit, Kohlenstoffnanoröhren, porösem Kohlenstoff, Graphen, Ruß, oder deren Gemischen.

3. Die Lithium-Schwefel-Batterie nach einem der vorstehenden Ansprüche, wobei der Kathodenableiter kein metallisches Substrat enthält.

4. Die Lithium-Schwefel-Batterie nach einem der vorstehenden Ansprüche, die Kathodeneinheit zusätzlich umfassend eine elektrochemisch inaktive, elektrisch leitfähige Kohlenstoffkomponente, die in elektrisch leitendem Kontakt mit dem Kohlenstoffsubstrat steht, wobei die elektrochemisch aktive Komponente zumindest teilweise die Oberfläche der elektrochemisch inaktiven, elektrisch leitfähigen Kohlenstoffkomponente belegt.

5. Die Lithium-Schwefel-Batterie nach Anspruch 4, wobei die elektrochemisch inaktive, elektrisch leitfähige Kohlenstoffkomponente ausgewählt wird aus Kohlenstoffnanoröhren, Graphit, Ruß, Graphen, porösen Kohlenstoffen, oder deren Gemischen.

## Claims

1. A lithium-sulphur battery comprising a cathode unit containing:
- a cathode collector which comprises a carbon substrate,
- an electrochemically active component which is selected from among sulphur and lithium sulphide and is in electrically conductive contact with the carbon substrate,
**characterized in that**
the carbon substrate is present as self-supporting sheet-like structure in the form of a carbon fibre felt, a woven carbon fibre fabric, a carbon gas diffusion layer or a combination thereof or a carbon nanotube braid or a carbon foil and has a thickness in the range from 50 µm to 5 mm and
the electrochemically active component at least partly covers the surface of the carbon substrate.

2. The lithium-sulphur battery according to Claim 1, wherein the carbon substrate has a carbon content of at least 70% by weight; and/or the carbon material of the carbon substrate is selected from among carbon fibres, graphite, carbon nanotubes, porous carbon, graphene, carbon black and mixtures thereof.

3. The lithium-sulphur battery according to any of the preceding claims, wherein the cathode collector does not contain any metallic substrate.

4. The lithium-sulphur battery according to any of the preceding claims, wherein the cathode unit additionally comprises an electrochemically inactive, electrically conductive carbon component which is in electrically conductive contact with the carbon substrate and the electrochemically active component at least partly covers the surface of the electrochemically inactive, electrically conductive carbon component.

5. The lithium-sulphur battery according to Claim 4, wherein the electrochemically inactive, electrically conductive carbon component is selected from among carbon nanotubes, graphite, carbon black, graphene, porous carbons and mixtures thereof.

## Revendications

1. Batterie lithium-soufre, comprenant une unité de cathode qui contient :
- un collecteur cathodique, qui comprend un substrat carboné,
- un composant électrochimiquement actif, qui est choisi parmi le soufre ou le sulfure de lithium, et est en contact électriquement conducteur avec le substrat carboné,
**caractérisé en ce que**
le substrat carboné se présente comme une structure plate autoporteuse sous la forme d'un feutre de fibres de carbone, d'un tissu de fibres de carbone, d'une couche de diffusion de gaz en carbone ou d'une combinaison de ceux-ci, ou d'un tressage de nanotubes de carbone ou d'un film de carbone, et présente une épaisseur dans la plage allant de 50 µm à 5 mm, et
le composant électrochimiquement actif recouvre au moins en partie la surface du substrat carboné.

2. Batterie lithium-soufre selon la revendication 1, dans laquelle le substrat carboné présente une teneur en carbone d'au moins 70 % en poids ; et/ou le matériau de carbone du substrat carboné est choisi parmi les fibres de carbone, le graphite, les nanotubes de carbone, le carbone poreux, le graphène, le noir de carbone ou leurs mélanges.

3. Batterie lithium-soufre selon l'une quelconque des revendications précédentes, dans laquelle le collecteur cathodique ne contient pas de substrat métallique.

4. Batterie lithium-soufre selon l'une quelconque des revendications précédentes, l'unité de cathode comprenant en outre un composant carboné électriquement conducteur et électrochimiquement inactif, qui est en contact électriquement conducteur avec le substrat carboné, dans laquelle le composant électrochimiquement actif recouvre au moins en partie la surface du composant carboné électriquement conducteur et électrochimiquement inactif.

5. Batterie lithium-soufre selon la revendication 4, dans laquelle le composant carboné électriquement conducteur et électrochimiquement inactif est choisi parmi les nanotubes de carbone, le graphite, le noir de carbone, le graphène, les carbones poreux ou leurs mélanges.
